# EUROPÄISCHE PATENTANMELDUNG

(11) **EP 0 761 421 A2**
(43) Veröffentlichungstag der Anmeldung: **12.03.1997**
(21) Anmeldenummer: 96110630.9
(22) Anmeldetag: 02.07.1996
(51) Int. Cl.: B29D 31/00, B29C 70/16, B29C 70/30

(54) **Verfahren zur Herstellung eines thermostabilen, quasiisotropen Wabenkerns aus faserverstärktem Material**

(30) Priorität: 06.09.1995 DE 19532850
(71) Anmelder: DORNIER GmbH, D-88039 Friedrichshafen (DE)
(72) Erfinder: Sippel, Rudolf, Dipl.-Ing., 88677 Markdorf (DE); Bizer, Dietrich, Ing.grad., 88682 Salem (DE)

(57) **Zusammenfassung**

Die Erfindung betrifft ein Verfahren zur Herstellung eines thermostabilen, quasiisotropen Wabenkerns (**5**) aus faserverstärktem Material und mit einheitlicher Wandstärke, **dadurch gekennzeichnet**, daß
- aus Formkörpern (**4, 4a, 4b**), deren Querschnitt entweder von der Form eines regelmäßigen Dreiecks oder eines regelmäßigen Sechsecks ist, und Gelegestreifen (**3**), deren Breite im wesentlichen der Breite einer Querschnittskante der Formkörper (**4, 4a, 4b**) entspricht, ein Formblock (8) aufgebaut wird, und zwar derart, daß Oberflächen benachbarter Formkörper (**4, 4a, 4b**) jeweils einen oder jeweils zwei Gelegestreifen (**3**) einschließen;
- anschließend erfolgt eine Temperaturbehandlung zur Verklebung benachbarter Gelegestreifen (**3**) und gleichzeitig zur Aushärtung der Gelegestreifen (**3**).

## Beschreibung

Die Erfindung betrifft ein Verfahren zur Herstellung eines thermostabilen, quasiisotropen Wabenkerns aus faserverstärktem Material.

Wabenkerne werden benötigt für die Sandwichbauweise, mit deren Hilfe sehr leichte und dennoch steife Strukturen gebaut werden können. Die Eigenschaft der Thermostabilität soll hier bedeuten, daß Formänderungen der Wabe infolge von Temperaturänderungen sehr gering sind. Mit der Eigenschaft der "Quasiisotropie" ist gemeint, daß die Steifigkeit in allen Richtungen einer Ebene gleich ist.

Die Anforderung der Thermostabilität ist typisch für hochgenaue Strukturen, die zum Beispiel im Bereich der Optik benötigt werden. Ein möglichst geringes Gewicht ist günstig bei hohen dynamischen Beanspruchungen, bei Einsatz im Bereich der Luft- und Raumfahrt sowie bei großen Strukturabmessungen. Ein sehr gut geeignetes Material für thermostabile Strukturen ist kohlefaserverstärktes Kunstharz. Dieses Material besitzt neben der niedrigen Wärmedehnung auch geringes Gewicht und hohe Steifigkeit.

Besonders geeignet ist die Verwendung eines thermostabilen Wabenkerns für die Herstellung großer optischer Leichtbauspiegels in Sandwichbauweise. Große optische Spiegel werden zum Beispiel benötigt für astronomische Teleskope, zur Übertragung von Laserstrahlen oder zur Konzentration der Sonnenstrahlung. Ist der Wabenkern innerhalb eines Sandwichspiegels quasiisotrop, so ist die Neigung des Spiegels zu systematischen Oberflächenfehlern (z.B. Astigmatismus) wesentlich verringert. Eine Wabe hat quasiisotrope Eigenschaften, wenn die Zellen aus gleichseitigen Sechsecken oder gleichseitigen Dreiecken bestehen und wenn alle Zellwände gleiche Dicke und gleiche Materialeigenschaften besitzen.

Aus der **EP 0 396 965 A1** ist eine Wabenkern mit dreieckigen oder sechseckigen Zellen bekannt, bei der sämtliche Zellwände gleiche Dicke aufweisen. Zur Herstellung dieser Wabenkerne wird eine mehrlagige Prepregschicht um einen Formkörper gewickelt, so daß sie sämtliche Oberflächen des Formkörpers bedeckt. Anschließend werden derart bewickelte Formkörper zu einem Formblock aneinander gelegt. Dieses Verfahren ist sehr zeitaufwendig und führt zu entsprechend hohen Herstellungskosten.

Der Erfindung liegt die Aufgabe zugrunde, ein kostengünstiges Verfahren zur Herstellung eines leichten Sandwichkern zu schaffen, der eine sehr geringe Thermalverformung hat und der in alle Richtungen parallel zur Sandwichoberfläche die gleiche Wärmedehnung und die gleiche Steifigkeit hat.

Diese Aufgabe wird durch den Gegenstand des Patentanspruchs 1 gelöst. Vorteilhafte Ausgestaltungen der Erfindung sind Gegenstand von Unteransprüchen.

Das erfindungsgemäße Verfahren läuft folgendermaßen ab:
- aus Formkörpern, deren Querschnitt entweder von der Form eines regelmäßigen Dreiecks oder eines regelmäßigen Sechsecks ist, und Gelegestreifen, deren Breite im wesentlichen der Breite einer Querschnittskante der Formkörper entspricht, wird ein Formblock aufgebaut, und zwar derart, daß Oberflächen benachbarter Formkörper jeweils einen oder jeweils zwei Gelegestreifen einschließen;
- anschließend erfolgt eine Temperaturbehandlung zur Verklebung benachbarter Gelegestreifen und gleichzeitig zur Aushärtung der Gelegestreifen.

Gegenüber dem Stand der Technik werden die Formkörper also nicht umwickelt, sondern es werden Gelegestreifen separat auf einzelnen Oberflächen der Formkörper abgelegt. Ein Gelegestreifen ist immer nur auf einer Oberfläche eines Formkörpes vorhanden.

Die Gelegestreifen erhält man, in dem eine Gelegeplatte entsprechend zerlegt wird.

Insgesamt wird ein sehr schnelles und kostengünstiges Herstellungsverfahren erreicht.

Die hier verwendeten Gelegestreifen sind vorteilhaft aus mehreren Schichten eines faserverstärkten Kunststoffmaterials aufgebaut. Beispiele hierfür sind thermoplastische oder duroplastische Kunststoffe, z.B. Kunstharze wie Epoxidharz, Silikonharz, Cyanatester.
Die Gelegestreifen könne aber auch aus Grünkörpermaterial zur Herstellung kohlefaserverstärkter Keramik oder kohlefaserverstärktem Kohlenstoff bestehen.

Die Gelegestreifen umfassen vorteilhaft mehrere Lagen unidirektionaler Faserprepregs. Die Lagen sind bevorzugt symmetrisch zur Mittelebene des Streifens angeordnet. Ein Beispiel hierfür ist die Verwendung von 6 Lagen mit der Ausrichtung 0^{o}, 60^{o}, -60^{o}, -60^{o}, 60^{o}, 0^{o}. Durch diese Ausrichtung gleichmäßig über 360^{o} werden quasiisotrope Eigenschaften in der Ebene des Gelegestreifens erreicht.

Die Erfindung wird nachfolgend anhand von Figuren erläutert.
Es zeigen:
- Fig. 1: den prinzipiellen Aufbau einer ebenen Gelegeplatte,
- Fig. 2: einen mit drei Gelegestreifen belegten hexagonalen Formkörper,
- Fig. 3: einen aus Formkörpern gemäß Fig. 2 aufgebauten Formblock (schematische Darstellung)
- Fig. 4: einen ausgehärteten Wabenkern, erhalten aus dem Formblock nach Fig. 3,
- Fig. 5: einen weiteren aus hexagonalen Formkörpern aufgebauten Formblock (schematische Darstellung)
- Fig. 6,7: jeweils einen aus dreieckigen Formkörpern aufgebauten Formblock (schematische Darstellung).

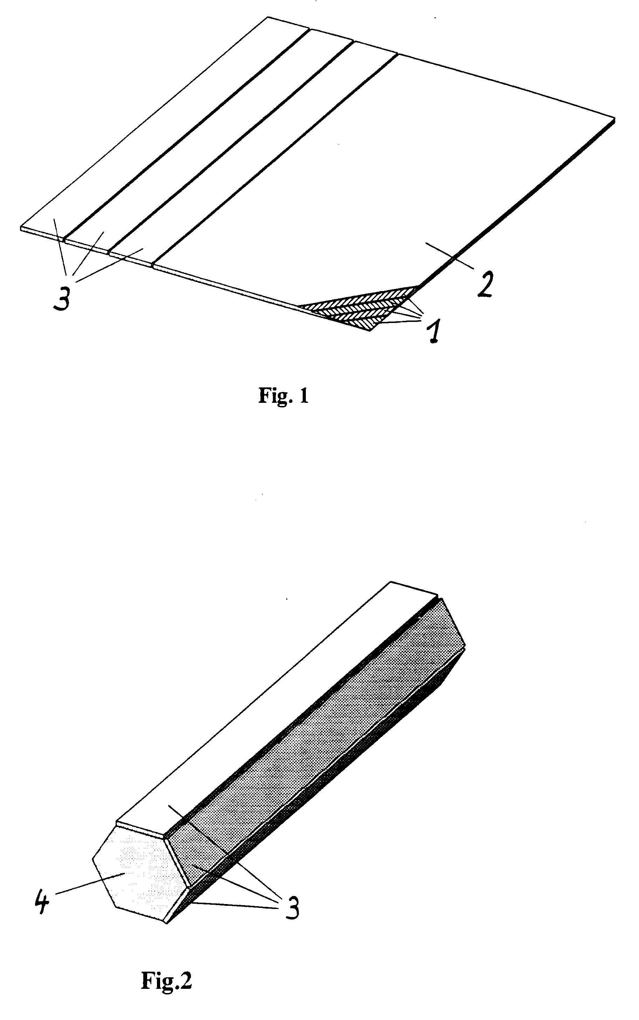

**Fig. 1** zeigt den grundsätzlichen Aufbau einer ebenen Gelegeplatte **2**. Das Grundmaterial für die Herstellung der Gelegeplatte **2** sind Einzelschichten **1** aus unidirektionalem Prepreg, z.B. Kohlefaser-Prepreg. Eine solche Prepregschicht besteht aus parallel nebeneinander abgelegten vorimprägnierten z.B. Kohlefaser-Rovings ("Roving"=Faden). Für die Imprägnierung sind verschiedene Kunstharze geeignet (z.B. Epoxidharz). Wichtig ist, daß das Tränkharz vor der Verwendung des Prepregs noch nicht zu weit ausgehärtet sein darf. Zur Erreichung quasiisotroper Steifigkeitseigenschaften innerhalb der Gelegeplatte werden mehrere Prepreg-Schichten **1** aufeinander abgelegt und bilden zusammen schließlich die Gelegeplatte **2** . Die Anzahl der Einzelschichten und die Faserrichtungen müssen so ausgewählt werden, daß die ausgehärtete Platte verwölbungsfrei quasiisotrop ist. Dazu wird die Ausrichtung der einzelnen Faserlagen möglichst gleichmäßig über 360^{o} verteilt. Ein besonders vorteilhafter Aufbau, der diese Bedingungen erfüllt und sich außerdem dadurch auszeichnet, daß die Gesamtdicke der Platte so gering wie möglich ist, hat die Faserwinkelfolge 0°, 60°, -60°, - 60°, + 60°, 0° (6 Einzelschichten). Diese Ausführung hat den weiteren Vorteil, daß die Lagen symmetrisch zur Mittelebene der Platte angeordnet sind. Die fertig abgelegte, aber noch nicht ausgehärtete Gelegeplatte wird anschließend in Gelegestreifen **3** gleicher Breite zerschnitten.

**Fig. 2** zeigt einen prismatischen Formkörper **4** mit dem Querschnitt von der Form eines gleichseitigen Sechsecks (hexagonaler Formkörper), wobei drei seiner Seitenflächen (im folgenden wird anstatt Seitenflächen auch der Begriff Oberflächen verwendet) mit jeweils einem Gelegestreifen **3** gleicher Dicke belegt sind. Gut geeignet für die Herstellung einer Hexagonalwabe sind zum Beispiel sechseckige Aluminiumprofile. Die Breite einer Seitenfläche und die Breite der Gelegestreifen **3** sind im wesentlichen gleich, so daß die Kanten der Gelegestreifen **3** auf benachbarten Seitenflächen nur geringen Abstand voneinander aufweisen oder sich sogar berühren. Bevor die Formkörper belegt werden, wird vorteilhaft deren Oberfläche mit Trennmittel beschichtet.

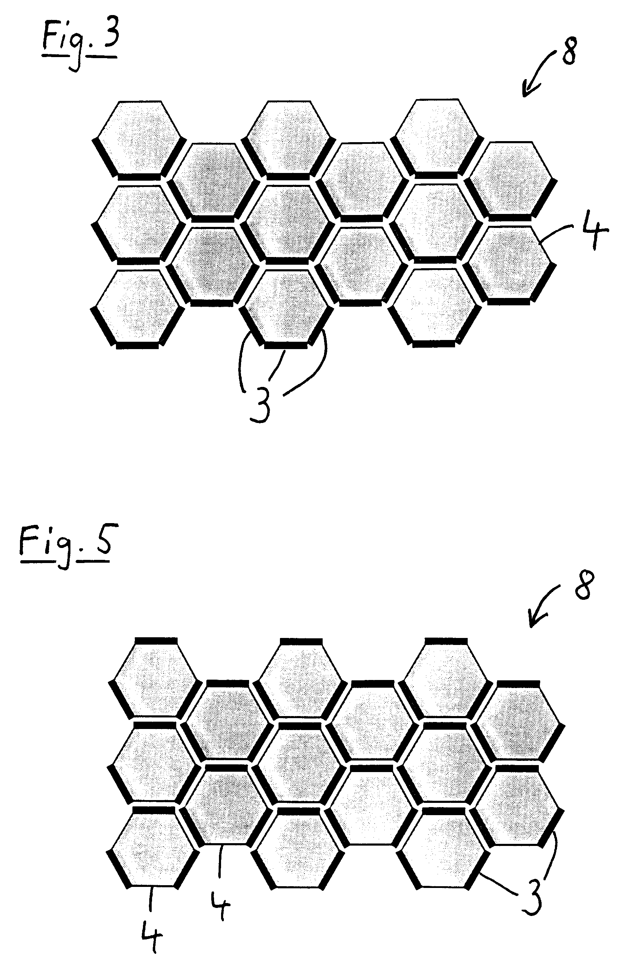

Anschließend wird durch sukszessiven Aufbau aus den solcherart belegten Formkörpern ein Formblock **8** zusammengesetzt, der in **Fig. 3** schematisch dargestellt ist. Zwischen parallelen Oberflächen benachbarter Formkörper befindet sich jeweils ein Gelegestreifen.

Die Tatsache, daß man beim Aufbau des Formblocks ausschließlich Formkörper **4** mit drei belegten, benachbarten Oberflächen verwendet, hat einen wesentlichen Vorteil. Dadurch ist es nämlich möglich, mit ausschließlich solchen Formkörpern einen Formblock aufzubauen, bei dem die Oberflächen benachbarter Formkörper immer genau einen Gelegestreifen einschließen. Dadurch kann ein thermostabiler, quasiisotroper Wabenkern mit einheitlicher und gleichzeitig geringer Wandstärke erhalten werden.

Der so aufgebaute Formblock **8** wird anschließend in geeigneter Weise zusammengespannt (z.B. durch Einpacken in einen luftdichten Foliensack und durch Anlegen von Vakuum).

Anschließend wird die Aushärtung des Harzes bei erhöhter Temperatur durchgeführt. Bei diesem Fertigungsschritt wird das Laminierharz mit steigender Temperatur zunächst dünnflüssiger. Aus den Rändern der Gelegestreifen tritt etwas Harz aus und fließt mit dem Harz benachbarter Streifen zusammen. Mit fortschreitender Aushärtung steigt die Viskosität des Harzes dann immer mehr an und schließlich tritt die abschließende Verfestigung ein. Die Kanten der benachbarten Gelegestreifen werden gleichzeitig durch das herausgetretene Laminierharz miteinander verklebt.

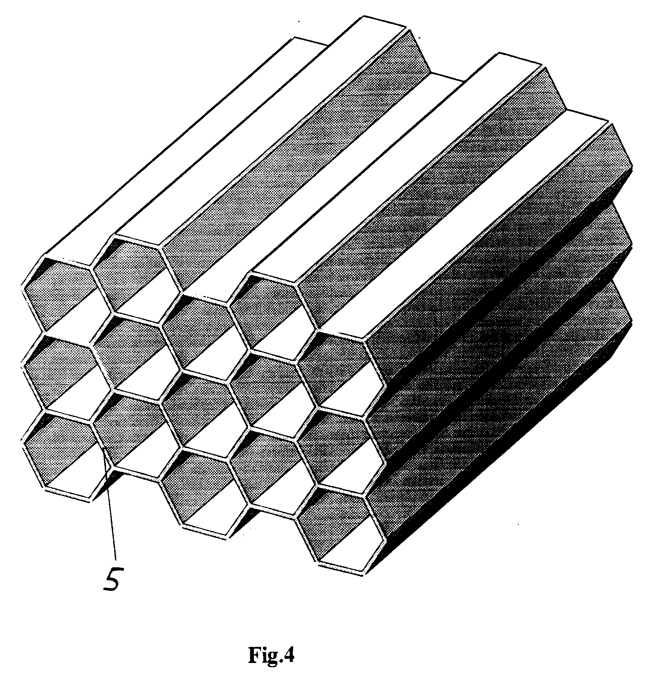

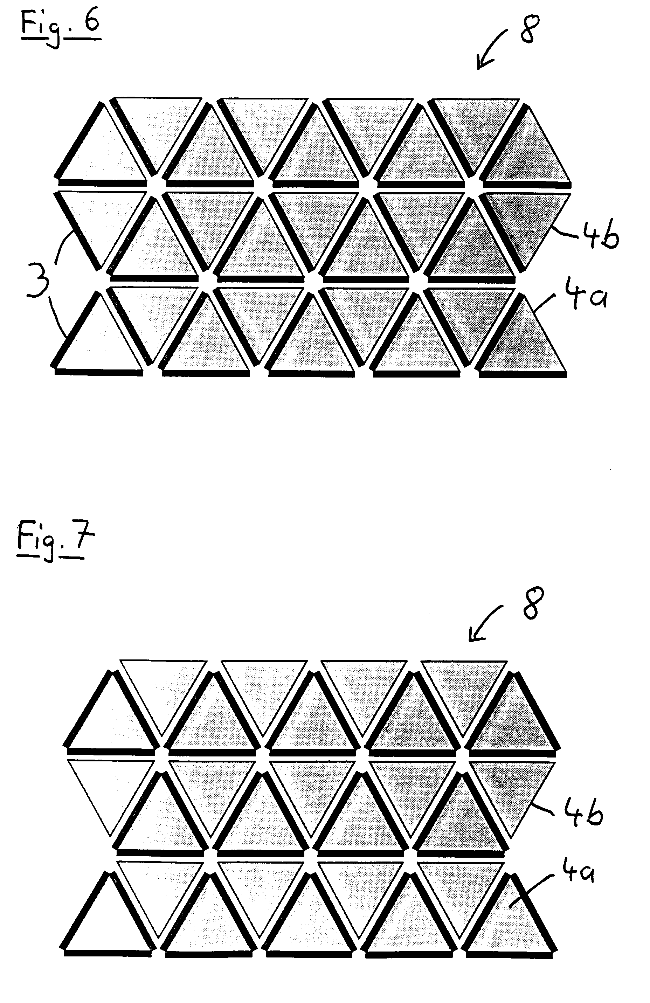

Nach der vollständigen Aushärtung des Harzes wird der Formblock ausgepackt und die Formkörper herausgedrückt. Der fertige Wabenkern **5** ist in **Fig. 4** dargestellt.
In dem bisherigen Ausführungsbeispiel nach den **Fig. 1** bis **Fig. 4** wurde der Formblock aufgebaut aus Formkörpern, bei denen drei benachbarte Oberflächen mit jeweils einem Gelegestreifen belegt worden war. Daneben sind jedoch auch andere Belegungen für die Formkörper möglich. Ein solches Beispiel zeigt **Fig. 5**.

**Fig. 5** zeigt in schematischer Darstellung einen Formblock **8** mit hexagonalen Formkörpern **4**. Er wird aufgebaut aus Formkörpern, bei denen jeweils drei Oberflächen, und zwar abwechselnd jede zweite, mit einem Gelegestreifen **3** belegt ist.

**Fig. 6** und **Fig. 7** zeigen jeweils ein Beispiel für den Aufbau eines Formblocks aus dreieckigen, gleichseitigen Formkörpern.
In der **Fig. 6** werden abwechselnd Formkörper **4 a**, bei denen zwei Oberflächen belegt sind, und Formkörper **4 b**, bei denen nur eine Oberfläche belegt ist, zum Aufbau des Formblocks **8** verwendet.
In der **Fig. 7** werden abwechselnd Formkörper **4 a**, bei denen alle drei Seiten belegt sind, mit Formbkörpern **4 b**, bei denen keine der Oberflächen belegt ist, zum Aufbau des Formblocks **8** verwendet.

Alternativ zu den gezeigten Ausführungsformen ist es selbstverständlich auch möglich, die Formkörper erst dann zu belegen, wenn sie sich bereits im Formblock befinden, und den Formblock sukszessive um Gelegestreifen und Formkörper zu erweitern (vergleichbar dem Aufbau einer Mauer aus Bausteinen und Fügematerial).

Neben den gezeigten Wabenkernen, bei denen zwischen benachbarten, parallelen Oberflächen genau ein Gelegestreifen eingeschlossen wird, ist es auch möglich, zwei Gelegestreifen zwischen derartigen Oberflächen anzuordnen. Dadurch erhält man ebenfalls überall identische Wandstärken. Hergestellt werden diese Wabenkerne zum Beispiel, in dem man den Formblock aus allseitig belegten Formkörpern aufbaut.

## Patentansprüche

1. Verfahren zur Herstellung eines thermostabilen, quasiisotropen Wabenkerns (**5**) aus faserverstärktem Material und mit einheitlicher Wandstärke, mit folgenden Verfahrensschritten:
- aus Formkörpern (**4, 4a, 4b**), deren Querschnitt entweder von der Form eines regelmäßigen Dreiecks oder eines regelmäßigen Sechsecks ist, und Gelegestreifen (**3**), deren Breite im wesentlichen der Breite einer Querschnittskante der Formkörper (**4, 4a, 4b**) entspricht, wird ein Formblock (**8**) aufgebaut, und zwar derart, daß Oberflächen benachbarter Formkörper (**4, 4a, 4b**) jeweils einen oder jeweils zwei Gelegestreifen (**3**) einschließen;
- anschließend erfolgt eine Temperaturbehandlung zur Verklebung benachbarter Gelegestreifen (**3**) und gleichzeitig zur Aushärtung der Gelegestreifen (**3**).

2. Verfahren nach einem der vorangehenden Ansprüche, **dadurch gekennzeichnet**, daß die Matrix des faserverstärkten Materials thermoplastischer oder duroplastischer Kunststoff ist.

3. Verfahren nach einem der vorangehenden Ansprüche, **dadurch gekennzeichnet**, daß das faserverstärkte Material Grünkörpermaterial zur Herstellung von kohlefaserverstärkter Keramik oder von kohlefaserverstärktem Kohlenstoff ist.

4. Verfahren nach einem der vorangehenden Ansprüche, **dadurch gekennzeichnet**, daß die Gelegestreifen (**3**) mehre Lagen unidirektionaler Faserprepregs (**1**) umfassen.

5. Verfahren nach Anspruch 4, **dadurch gekennzeichnet**, daß die Lagen unidirektionaler Faserprepregs (**1**) innerhalb der Gelegestreifen (**3**) symmetrisch angeordnet sind.

6. Verfahren nach Anspruch 5, **dadurch gekennzeichnet**, daß 6 Lagen vorhanden sind mit der Orientierung 0^{o}, 60^{o}, -60^{o}, -60^{o}, 60^{o}, 0^{o}.

7. Verfahren nach einem der Ansprüche 4 bis 6, **dadurch gekennzeichnet**, daß die Lagen unidirektionaler Faserprepregs (**1**) derart angeordnet sind, daß sich quasiisotrope Eigenschaften der Gelegestreifen (**3**) ergeben.
